# FASCICULE DE BREVET EUROPEEN

(11) **EP 3 106 325 B1**
(45) Date de publication et mention de la délivrance du brevet: **14.03.2018**
(21) Numéro de dépôt: 16174637.5
(22) Date de dépôt: 15.06.2016
(51) Int. Cl.: B60C 23/00, B60K 7/00, B60B 27/00, F16C 33/66, F16C 33/72

(54) **SYSTÈME PNEUMATIQUE POUR GONFLAGE DE PNEU INTÉGRÉ À UN ESSIEU MOTORISÉ**
PNEUMATISCHES SYSTEM ZUM BEFÜLLEN EINES REIFENS, DAS IN EINE MOTORISIERTE ACHSE INTEGRIERT IST
PNEUMATIC SYSTEM FOR TYRE INFLATION BUILT INTO A MOTORISED AXLE

(30) Priorité: 16.06.2015 FR 1555500
(43) Date de publication de la demande: 21.12.2016
(73) Titulaire: Poclain Hydraulics Industrie, 60410 Verberie (FR)
(72) Inventeur: VIDAL, Stéphane, 60410 VERBERIE (FR); PEROT, Marc, 60410 VERBERIE (FR); MICHON, Sylvain, 60410 VERBERIE (FR)
(74) Mandataire: Regimbeau

(56) Documents cités:
- EP-A1- 2 803 506
- FR-A1- 2 465 602
- FR-A1- 2 673 684
- FR-A1- 2 895 470
- GB-A- 2 477 816

## Description

### DOMAINE TECHNIQUE GENERAL

L'invention concerne les systèmes d'alimentation pneumatique pour contrôler et gonfler l'état de gonflage des roues de véhicules.
Plus particulièrement, l'invention concerne de tels systèmes dans le cadre de roue motorisée localement par une machine hydraulique à arbre tournant.

### ETAT DE L'ART

L'ajustement du gonflage des roues est fréquent sur les machines agricoles ou les engins de chantier pour augmenter ou diminuer la surface de contact avec le sol.

Sur les essieux classiques, sans machine hydraulique, l'amenée d'air comprimé se fait par l'axe fixe de la fusée de roue.

Dans le cadre d'une roue motorisée localement par une machine hydraulique à arbre tournant, la roue est entrainée en rotation par l'arbre de la machine hydraulique, l'arbre étant porté par un palier de roulement. Par conséquent, pour l'amenée d'air comprimé jusque dans la roue, une liaison entre une partie fixe et une liaison tournante est nécessaire.

En raison des conditions d'utilisation de tels véhicules, le système doit être intégré.

Les solutions existantes impliquent des modifications architecturales qui déportent la roue vers l'extérieur ou bien qui fragilisent les composants existants, notamment en créant des canaux dans l'essieu qui peuvent fragiliser la structure à cause de la corrosion provoquée par l'air comprimé (humidité, etc.). Le document FR 2 895 470 A1 décrit un tel système pour alimentation pneumatique de roue connu, comprenant un jeu de roulement de palier, disposé entre un support de palier et un moyeu pour la rotation dudit moyeu dans le support de palier autour d'un axe longitudinal.

### PRESENTATION DE L'INVENTION

L'invention présentée vise à pallier ces différents inconvénients, en proposant un système pour alimentation pneumatique de roue comprenant :
- un support de palier,
- un arbre s'étendant selon un axe longitudinal à l'intérieur du support de palier et comprenant une extrémité formant moyeu qui s'étend radialement, l'arbre étant configuré pour être entrainé en rotation par une machine hydraulique,
- au moins un jeu de roulement de palier, disposé entre le support de palier et l'arbre pour la rotation dudit arbre dans le support de palier autour de l'axe longitudinal,
dans lequel le système comprend en outre :
- une chambre formée par l'extrémité formant moyeu, le support de palier, un joint de roulement et un joint de chambre,
- Un canal primaire traversant le support de palier et débouchant dans la chambre,
- Un canal secondaire traversant l'extrémité formant moyeu et débouchant dans la chambre,
dans lequel :
- le joint de roulement, disposé longitudinalement entre le jeu de roulement de palier et la chambre, est au contact du support de palier et de l'arbre pour assurer l'étanchéité entre l'arbre configuré pour être mobile en rotation et le support de palier configuré pour être fixe,
- le joint de chambre est au contact du support de palier et de l'extrémité formant moyeu pour assurer l'étanchéité entre l'extrémité formant moyeu configurée pour être mobile en rotation et le support de palier configuré pour être fixe.

L'invention vise à permettre l'alimentation en air comprimé d'un pneumatique monté sur une jante du véhicule. La chambre permet la communication fluidique entre des pièces en rotation et des pièces fixes. Les joints permettent la création d'une telle chambre étanche. Les deux canaux ont pour rôle de transmettre l'air comprimé depuis le support de palier fixe jusqu'à la jante tournante.

L'invention comprend aussi les caractéristiques suivantes, prises seules ou en combinaison :
- l'extrémité formant moyeu comprend une extension longitudinale qui vient en regard d'une extrémité du support de palier, ladite extrémité du support de palier étant ainsi radialement située entre l'arbre et l'extension longitudinale,
- le joint de chambre est positionné radialement entre l'extrémité du support de palier et l'extension longitudinale,
- le joint de roulement et le joint de chambre sont situés dans un même plan radial,
- le canal primaire comprend une portion de canal rectiligne s'étendant longitudinalement dans l'extrémité du support de palier et débouchant dans la chambre,
- le système comprenant une deuxième portion de canal s'étendant parallèlement à la portion de canal, de façon à avoir des portions avec des sections moindres,
- le canal secondaire traverse longitudinalement dans l'extrémité formant moyeu,
- l'extrémité formant moyeu comprend une zone de fixation et le canal secondaire relie la chambre à ladite zone de fixation,
- le canal secondaire débouche dans la zone de fixation en formant un angle compris entre 30 et 60° par rapport à l'axe longitudinal,
- le canal secondaire comprend une première portion s'étendant longitudinalement depuis la zone de fixation et une deuxième portion reliant la chambre à la première portion,
- comprenant en outre un joint de protection positionné radialement entre le support de palier et l'extension longitudinale pour protéger le joint de chambre, ledit joint de chambre étant ainsi situé longitudinalement entre la chambre et le joint additionnel,
- les roulements de palier sont lubrifiés avec de la graisse,
- Le système comprend un deuxième jeu de roulements de paliers séparés de l'autre jeu de roulement par un joint,
- Le deuxième jeu de roulements est lubrifié avec de l'huile.

L'invention propose aussi un ensemble comprenant :
- un système tel que décrit précédemment,
- les moyens de fourniture d'air comprimé avec un tuyau, pour fournir de l'air comprimé,
- une jante,
dans lequel :
- la jante est solidaire de l'extrémité formant moyeu,
- le tuyau alimente en air comprimé le premier canal,
- la jante est alimentée en air par le deuxième canal, via la chambre.

L'invention propose un véhicule comprenant un ensemble tel que décrit précédemment.
Lesdits véhicules peuvent être des engins routiers, mais également des machines agricoles ou des engins de travaux publics, et, au sens large, toutes les machines ayant une roue (par exemple des camions, etc.) et qui comportent une l'alimentation en air comprimé d'un pneumatique monté sur une jante.

L'invention propose enfin un procédé d'assemblage d'un système tel que décrit précédemment, comprenant des étapes :
- d'équipement d'un support de palier,
- d'équipement d'un arbre,
- de pose du support de palier et de l'arbre,
- d'assemblage du support de palier et de l'arbre.

Le procédé peut comprendre les sous-étapes suivantes :
- l'étape d'équipement du support de palier comprend la mise en place d'une piste de roulement d'un joint métallique d'un joint de protection,
- l'étape d'équipement de l'arbre comprend la mise en place d'un joint de chambre et d'un joint de roulement, la mise en place d'une piste de roulement et du roulement correspondant,
- l'étape d'assemblage du support de palier et de l'arbre comprend la mise en place d'une cale et d'un anneau élastique.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente une vue en coupe d'un ensemble comprenant un système conforme à un mode de réalisation de l'invention ainsi qu'une jante et des moyens de fourniture d'air comprimé,
- La figure 2, représente une vue en coupe d'un système conforme à ce mode de réalisation de l'invention,
- La figure 3 représente une vue en trois dimensions d'un système conforme à ce mode de réalisation de l'invention,
- La figure 4 représente une vue agrandie d'un mode de réalisation des joints,
- La figure 5 représente en vue en coupe selon un plan orthogonal à l'axe longitudinal des joints, arbres, support de palier notamment,
- La figure 6 représente un grossissement en trois dimensions d'un mode de réalisation du canal primaire,
- Les figures 7 et 8 représentent un mode de réalisation du canal secondaire,
- Les figures 9 et 10 représentent un autre mode de réalisation du canal secondaire,
- Les figures 11 et 12 représentent deux modes de réalisation d'une soupape pour les roulements,
- La figure 13 représente une partie d'une machine hydraulique à pistons radiaux,
- La figure 14 représente différentes étapes d'un procédé d'assemblage.

### DESCRIPTION DETAILLEE

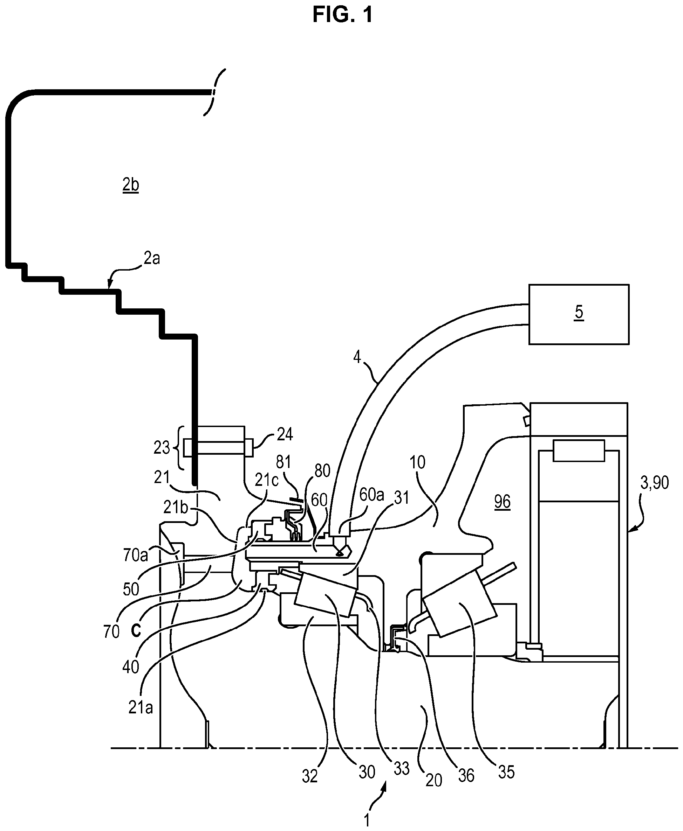

En relation avec les **figures 1 à 4** sont représentés un système 1 comprenant un support de palier 10 ainsi qu'un arbre 20 qui s'étend selon un axe longitudinal X et qui comprend une extrémité 21 formant moyeu. Le support de palier 10 a une forme générale de révolution à l'intérieur de laquelle l'arbre 20 est mobile en rotation.

L'extrémité 21 formant moyeu permet d'attacher une jante de roue 2a portant un pneumatique 2b. A cette fin, l'extrémité 21 formant moyeu s'étend radialement, c'est-à-dire qu'elle possède une dimension selon une direction radiale Y, orthogonale à l'axe longitudinal X, supérieure à une dimension de l'arbre 20 (en dehors de l'extrémité 21 formant moyeu) selon la même direction Y.

Le système est monté sur un véhicule, par exemple un véhicule agricole ou de chantier, équipé de jantes 2a portant chacune un pneumatique 2b. Le pneumatique 2b peut être gonflé à différentes pressions. En particulier, dans le cadre de l'invention, le gonflement du pneumatique 2b se fait par une arrivée d'air au niveau de la jante. La coopération entre la jante 2a et le pneumatique 2b est connue et ne sera pas décrite ici.
Des moyens de fourniture d'air comprimé 5 permettent d'alimenter le système en air comprimé, comme cela sera détaillé par la suite.

### Le palier

L'arbre 20 est tournant selon l'axe longitudinal X par rapport au support de palier 10. On définit ainsi que le support de palier 10 est fixe.
Par fixe, on entend donc relativement à un référentiel véhicule. Toutefois, même si le support de palier 10 n'effectue pas de rotation liée au déplacement du véhicule, il peut être mobile dans un référentiel lié au véhicule lorsqu'il équipe une roue directionnelle.
Au moins un jeu de roulement de palier est prévu entre le support de palier 10 et l'arbre 20. Le roulement comprend des pistes de roulement et des éléments roulant sur ces pistes, comme des rouleaux, des billes ou tout autre moyen équivalent. Les éléments roulant peuvent être logés dans des cages pour les maintenir en position. Sur l'exemple de roulement à rouleaux représenté, des rouleaux coniques 30 prennent appui sur deux pistes de roulement 31, 32, l'une solidaire du support de palier 10 et l'autre de l'arbre 20. Les rouleaux du roulement sont typiquement logés dans des cages 33.
Le jeu de roulements de palier 30 est typiquement lubrifié avec de la graisse. La graisse permet une meilleure lubrification que l'huile. Elle fonctionne mieux aux pressions de contact élevées, et permet une meilleure durée de vie des roulements pour des charges très élevées sur les paliers. Alternativement, pour simplifier l'architecture du système, le jeu de roulements de palier 30 peut être lubrifié avec de l'huile.

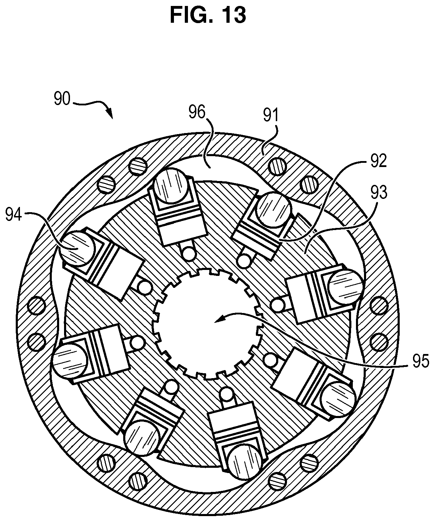

Un deuxième jeu de roulements de palier 35 peut être prévu, pour former un montage en « O » ou en « X ». Ce jeu 35 a aussi ses propres pistes de roulements. Un joint inter-roulement 36 peut séparer les deux jeux de roulements 30, 35 pour permettre à chacun d'avoir sa propre lubrification. Par exemple, le deuxième jeu 35 peut être lubrifié avec de l'huile issue d'une machine hydraulique. D'une manière générale, les roulements peuvent être lubrifiés à l'huile, ou à la graisse, ou d'une manière mixte, certains à l'huile et certains à la graisse dans la même machine.
Quoiqu'il en soit, les roulements qui sont lubrifiés à la graisse doivent être séparés de l'huile contenue dans un carter de la machine hydraulique 96 (voir **figure 1****,** **13**) par un joint.
Alternativement, les pistes des roulements 30 ou 35 peuvent être réalisées d'une pièce avec le support de palier 10 ou l'arbre 20. Longitudinalement, ces éléments sont agencés dans l'ordre suivant : extrémité 21 formant moyeu, le jeu de roulements 30, le joint inter-roulement 36, le deuxième jeu de roulements 35, puis la machine hydraulique 3.

L'arbre 20 est préférablement entrainé en rotation par une machine hydraulique 3. La machine hydraulique 3 sera présentée en fin de description.

### La chambre

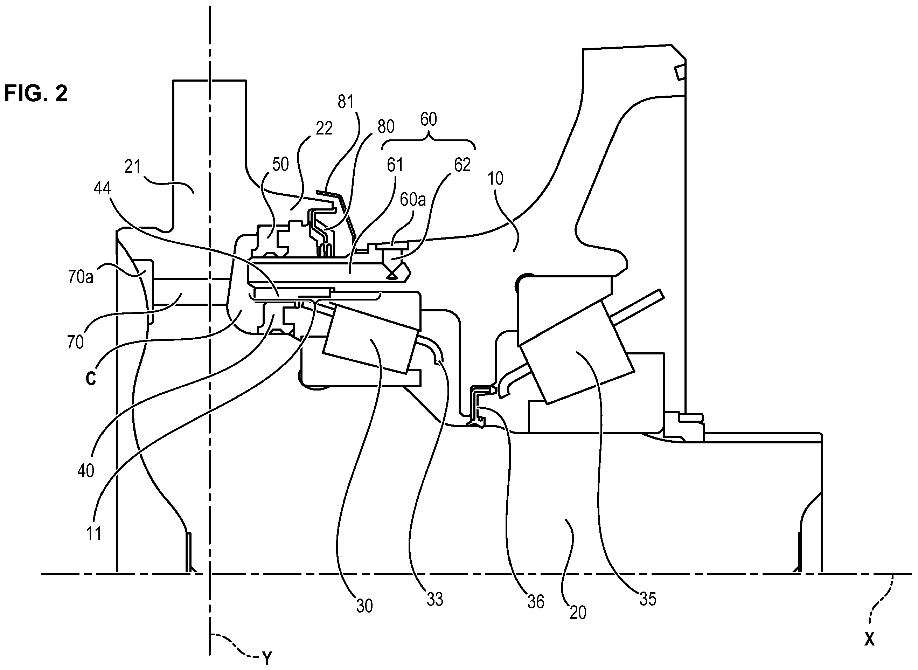

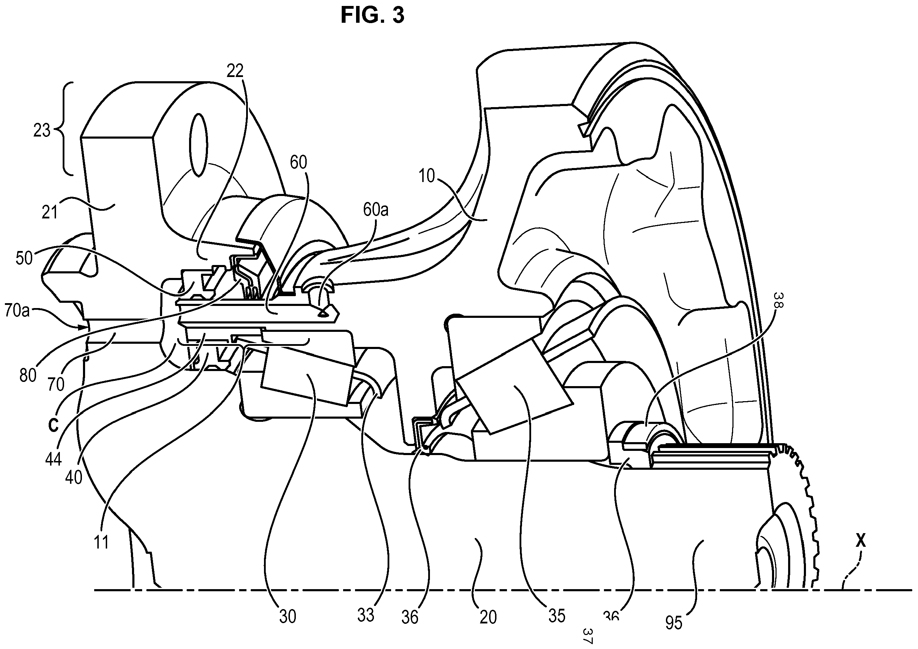

Afin de pouvoir alimenter la jante 2a en air comprimé pour permettre un gonflement du pneumatique 2b, le système 1 comprend en outre une chambre C formée par l'extrémité 21 formant moyeu, le support de palier 10 et deux joints : un joint de roulement 40 et un joint de chambre 50 **(****figures 2****,** **3****).**
Cette chambre C, formée entre des pièces tournantes et des pièces fixes (non tournantes), permet d'effectuer l'interface dans le système de transmission d'air comprimé depuis les moyens de fourniture d'air comprimé 5 vers la jante 2a **(****figure 1****).**

En effet, un canal primaire 60 est prévu, qui traverse le support de palier 10 pour déboucher dans la chambre C. Ce canal primaire 60 comprend un orifice d'admission 60a, débouchant en surface radiale extérieure du support de palier 10, sur lequel se branche un tuyau 4 relié aux moyens de fourniture d'air comprimé 5 **(****figure 1****).** Etant donné que l'orifice d'admission 60a est sur le support de palier 10, il est fixe et peut donc être alimenté sans difficulté en air comprimé. L'air comprimé est ainsi injecté dans la chambre C étanche grâce aux joints 40, 50.

Un canal secondaire 70 est aussi prévu, qui traverse l'extrémité 21 formant moyeu pour déboucher dans la chambre C. Ce canal secondaire 70 comprend un orifice de sortie 70a configuré pour déboucher dans la partie de l'extrémité 21 formant moyeu, qui est située sensiblement au centre ou dans la partie centrale de la jante 2a **(****figure 1****).** L'orifice de sortie 70a contient d'une manière connue des surfaces d'étanchéité et de fixation, typiquement un filetage, pour recevoir un raccord vers le pneumatique 2b *via* la jante. Etant donné que l'orifice de sortie 70a est sur l'extrémité 21 formant moyeu qui est tournante, la fonction de la chambre C est d'offrir une liaison fluidique entre les éléments fixes du système et les éléments tournants.

Un système de valve de contrôle du gonflage (non représenté sur les figures) peut être fixé sur l'orifice de sortie 70a afin de contrôler le débit d'air destiné à aller dans le pneu.
Un orifice de gonflage (non représenté sur les figures) présent dans la jante, permet de mettre en communication l'intérieur du pneumatique à l'orifice de sortie 70a, *via* notamment la valve de contrôle du gonflage, à l'aide par exemple d'un tuyau (non représenté sur les figures). Ce tuyau peut être rigide et formé suivant sa trajectoire, ou souple, ou comporter une partie rigide et une partie souple.
Plus généralement, la valve de contrôle peut être disposée n'importe où sur la chaine de transmission d'air entre l'orifice de sortie 70a du canal secondaire 70 et l'orifice de gonflage. Les communications fluidiques sont alors assurées soit par fixation solidaire directe, soit par des tuyaux souples.

L'étanchéité est assurée grâce aux joints 40, 50 qui ferment la chambre C. Les deux joints 40, 50 sont sous la forme d'un joint circulaire.
La chambre C a une section selon un plan orthogonal à l'axe longitudinal X en forme d'anneau, ou selon le plan choisi, de plusieurs anneaux concentriques.

### Les joints

Le joint de roulement 40 assure l'étanchéité de la cavité C au niveau de l'arbre 20 et du support de palier 10. Il est situé :
- radialement entre le support de palier 10 et l'arbre 20 et
- longitudinalement entre l'extrémité 21 formant moyeu et le roulement 30.

Le joint de roulement 40 est au contact à la fois du support de palier 10 et de l'arbre 20, pour assurer l'étanchéité de la cavité C lors de la rotation de l'arbre 20.

Le joint de chambre 50 assure l'étanchéité de la cavité C au niveau de l'extrémité 21 formant moyeu et du support de palier 10.
Dans un mode de réalisation préféré, le support de palier 10 comprend une extrémité 11 et l'extrémité 21 formant moyeu comprend une extension longitudinale 22 qui vient longitudinalement en regard de l'extrémité 11 du support de palier 10. On obtient ainsi que l'extrémité 11 du support de palier 10 est radialement située entre l'arbre 20 et l'extension longitudinale 22 de l'extrémité 21 formant moyeu. L'extrémité 11 du support de palier 20 a une forme de fût cylindrique qui vient se loger à l'intérieur d'une gorge circulaire formée dans l'extrémité 11 formant moyeu. La gorge, qui comprend une face radiale interne 21a, une face axiale 22b et une face radiale externe 21c, débouche sur le support de palier 20.
Dans cette configuration, le joint de chambre 50 est avantageusement positionné entre l'extrémité 11 du support de palier 10, c'est-à-dire sur la face radiale externe 21c et l'extension longitudinale 22. Il assure l'étanchéité de la cavité C entre l'extension longitudinale 22 tournante et l'extrémité 11 du support de palier 10 fixe (non tournante).

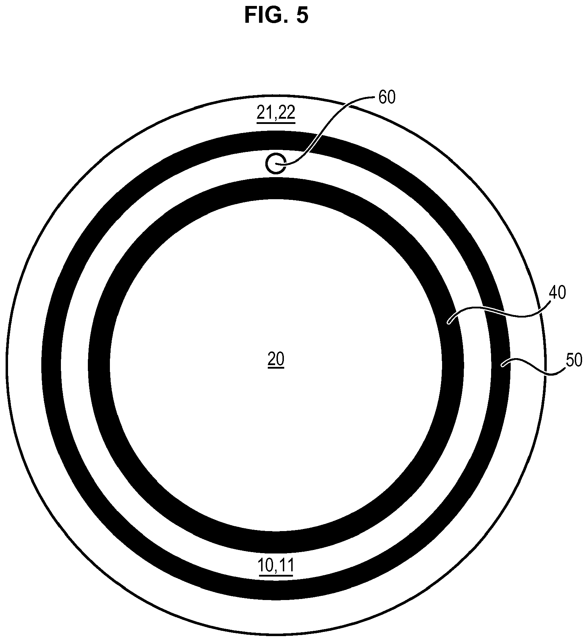

Avantageusement, les deux joints 40, 50 sont situés dans un même plan radial ou sensiblement dans un même plan radial, c'est-à-dire dans un même, ou sensiblement dans un même, plan orthogonal à l'axe longitudinal.
Selon une vue en coupe du système présenté en **figure 5** (figure non à l'échelle) on retrouve dans un même plan, orthogonal à l'axe longitudinal X, l'arbre 20, le joint de roulement 40, l'extrémité 11 du support de palier 10, le joint de chambre 50 et l'extension longitudinale 22. Les joints 40, 50 sont radialement encadrés par l'arbre 20 et le support de palier 10, ou l'arbre 20 et l'extension longitudinale 22.
Par sensiblement dans un même plan, on entend qu'il existe un plan de coupe radiale dans lequel les deux joints sont visibles.

Un support de joint 44 de type frette peut être disposé entre le joint de roulement 40 et le support de palier 10 et un support de calage 45 peut être disposé entre ledit joint 40 et l'arbre 20 (face radiale interne 21a). Une cale 46 peut être disposée dans la chambre C, au contact du joint de chambre C, pour le bloquer longitudinalement.
Ces dispositions de supports 44, 45 et de cale 46 ne sont nécessaire que dans la mesure où le dispositif n'est pas spécialement conçus pour avoir la chambre C et les joints 40, 50.
En particulier, comme représenté sur la **figure 3****,** le support de joint 44 est disposé entre le joint de roulement 40 et le support de palier 10. Un tel support 44 permet d'implémenter un joint standard sur des architectures spécifiques issues elles-aussi de système standard sans alimentation pneumatique.

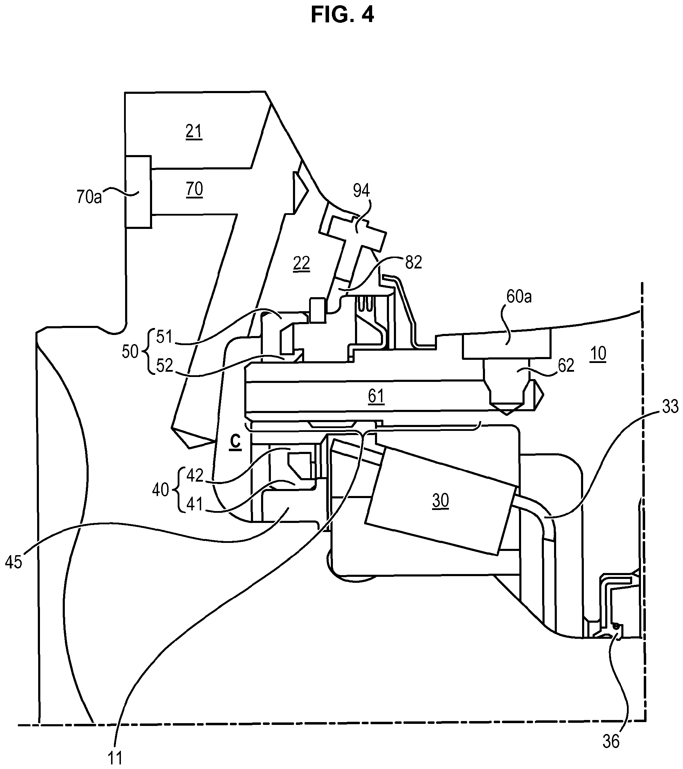

Préférentiellement, comme représenté en **figure 4****,** les joints 40, 50 sont de type bague à lèvre, qui sont adaptées pour les pièces tournantes. Dans un mode de réalisation, les joints 40, 50 comprennent chacun une garniture 41, 51, en contact fixe respectivement avec l'arbre 20 et l'extrémité 21 formant moyeu (ou le support de joint 41 le cas échéant), et une lèvre d'étanchéité 42, 52, qui est en frottement avec le support de palier 10 (ou le support de joint 41 le cas échéant) et permet l'étanchéité de la cavité C malgré la rotation. Les deux joints 40, 50 sont solidaires des parties tournantes et sont donc en rotation par rapport au support de palier 10. Ce mode de réalisation est pratique pour l'assemblage et le montage de la machine.
Néanmoins, un des deux joints 40, 50 peut ne pas être tournant (voir **figure 2** par exemple) et être solidaire du support de palier 10.
La garniture et la lèvre d'étanchéité sont reliées entre elle par une partie intermédiaire plus fine déportée sur un des bords de la garniture et de la lèvre, définissant ainsi une partie creuse au niveau du bord opposé entre la garniture et la lèvre. Cette partie creuse forme, dans un plan de coupe représenté sur les figures, un C. Selon un mode de réalisation, la partie creuse fait face à la chambre C, selon un autre mode de réalisation, la partie creuse fait face aux roulements.
Additionnellement, une bague de protection peut être combinée avec chaque joint à lèvre.

### Le canal primaire

Selon un mode de réalisation préféré, le canal primaire 60 comprend une portion de canal 61 rectiligne qui s'étend longitudinalement ou sensiblement longitudinalement par rapport à l'axe longitudinal X dans l'extrémité 11 de support de palier 10. La portion de canal 61 débouche dans la chambre C.
Afin de pouvoir relier la portion de canal 61 à l'orifice d'admission 60a, un conduit 62 rectiligne est prévu. Ce dernier s'étend radialement, ou sensiblement radialement, c'est à dire orthogonal ou sensiblement orthogonal à l'axe longitudinal X.
L'orifice d'admission 60a contient des moyens de fixation non représentés, par exemple un filetage et des moyens d'étanchéité, pour le raccorder au tuyau 4 d'une manière connue.
L'agencement du canal primaire 60 en une portion de canal 61 rectiligne et un conduit 62 rectiligne qui se recoupent dans le support de palier 10 permet leur formation dans le support de palier 10 par simple perçage. Pour limiter le retrait de matière du support de palier, la longueur du canal primaire 60 est préférablement minimale.
En recourant au perçage, il n'est ainsi pas nécessaire de modifier les moules de fonderie.

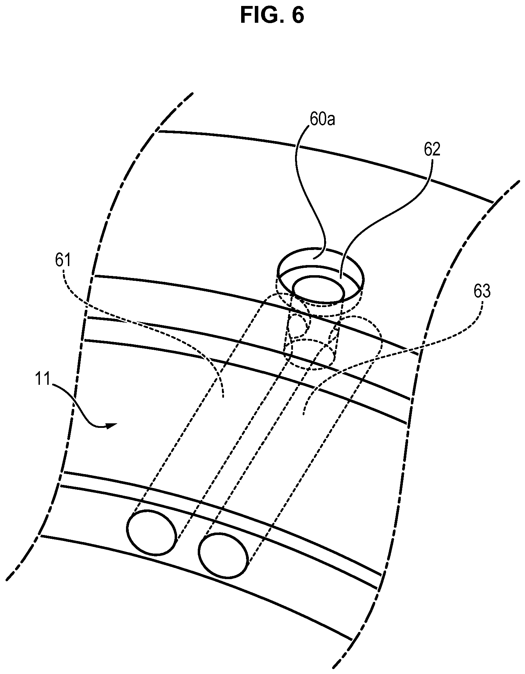

Selon un mode de réalisation présenté en **figure 6****,** le canal primaire 60 peut comprendre une deuxième portion de canal 63 fluidiquement en parallèle à celle mentionnée précédemment. Les deux portions de canal 61, 63 débouchent dans la cavité C et sont alors écartées d'une distance inférieure au diamètre du conduit 62, afin de pouvoir déboucher aussi dans le conduit 62. Comme représenté sur la **figure 6****,** la communication se fait par intersection de plusieurs cylindres correspondant aux portions 61, 63 et conduit 62. Dans le cas présenté en **figure 6****,** les deux portions 61, 63 sont géométriquement parallèles. Avoir deux portions de canal 61, 63 permet de diminuer leur diamètre comparativement à une seule portion 61, pour un flux d'air constant. Le support de paliers 10 est une pièce soumise à des contraintes fortes (il porte notamment le poids du véhicule) et il peut être souhaitable de minimiser le volume de chaque évidement.
Alternativement, il est possible de prévoir un conduit 62 pour chacune des portions 61, 63 respectives, mais il faut alors prévoir un dédoublement du tuyau 4, ce qui complexifie la réalisation du système et augmente la quantité de matière à évider. Néanmoins, avoir deux portions de canal 61, 63 permet de limiter l'évidement de matière radialement. Cela permet d'avoir une pièce de support de palier 10 plus résistante, ou plus fine, pour passer le flux d'air nécessaire.

### Le canal secondaire

Plusieurs modes de réalisation du canal secondaire vont à présent être décrits.
On définit une zone de fixation 23 sur l'extrémité 21 formant moyeu (voir **figure 1****).** Cette zone correspond à une zone plane radiale (par rapport à l'axe longitudinale X) du moyeu sur lequel la jante 2a est solidarisée. Généralement, elle permet d'accueillir un ensemble de boulons 24 répartis régulièrement dans un anneau traversé en son centre par l'axe longitudinal X.

Comme représenté en **figure 2** par exemple, le canal secondaire 70 peut se faire sous forme un canal rectiligne s'étendant longitudinalement ou sensiblement longitudinalement selon l'axe longitudinal X. Par l'architecture de l'extrémité 21 formant moyeu et la zone de fixation 23 qui se trouve radialement plus éloignée que la chambre C, l'orifice de sortie 70a du canal 70 se trouve radialement entre l'axe longitudinal X et la zone de fixation 23.

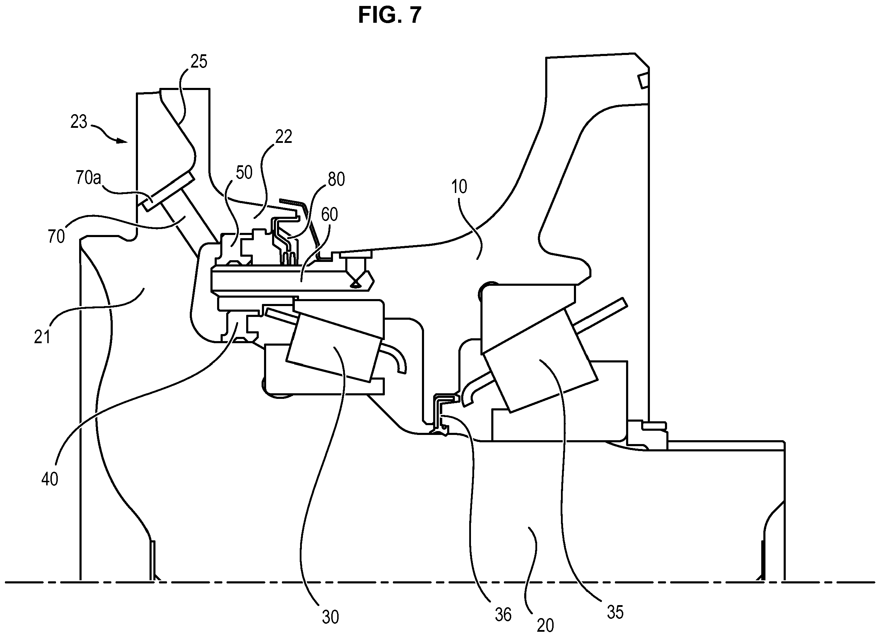

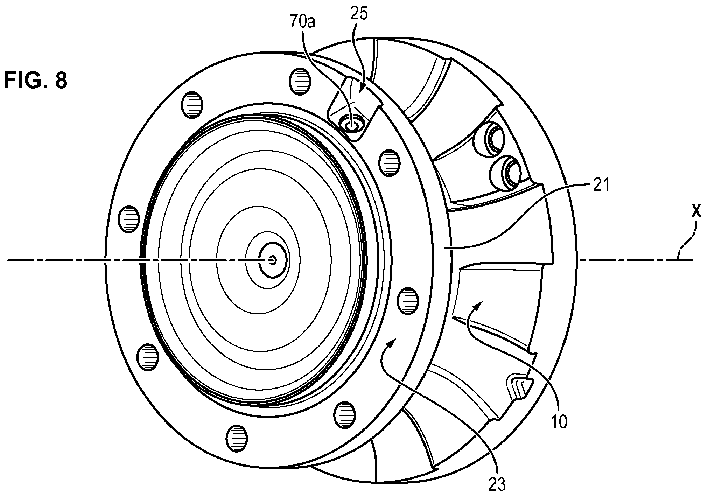

Comme représenté en **figures 7** **et** **8****,** le canal secondaire 70 peut se faire sous forme d'un canal rectiligne s'étendant de biais en divergeant radialement par rapport à l'axe longitudinal X pour déboucher au niveau de la zone de fixation 23, c'est-à-dire que l'orifice de sortie 70a se trouve dans cette zone 23. Un renfoncement 25 est formé dans la zone de fixation 23 pour permettre à l'orifice de sortie 70a d'être dans le prolongement du canal rectiligne 70 sans pour autant être dans la zone plane de la zone de fixation 23.
Par « de biais », on entend que dans un plan de coupe comprenant l'axe longitudinal X, le canal s'étend selon un angle compris entre 10 et 80°, et plus précisément entre 30 et 60°.

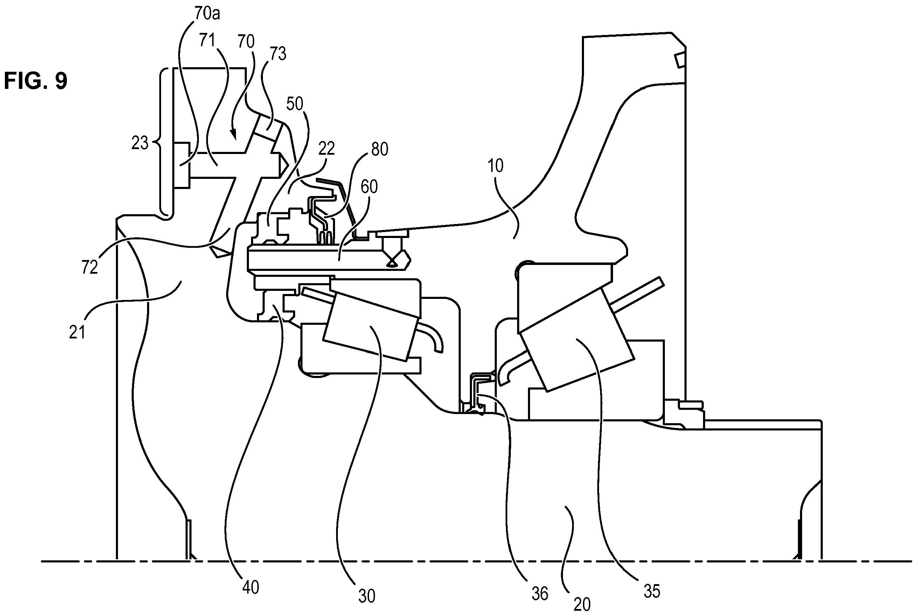

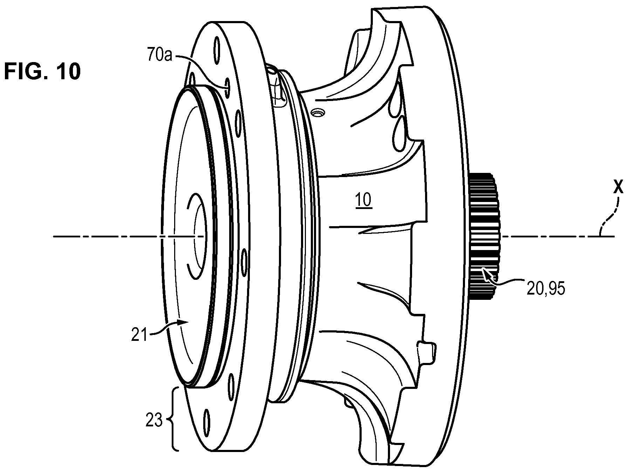

Alternativement, comme représenté en **figures 9****,** **10** et **11****,** **12****,** le canal secondaire 70 peut comprendre une première portion 71 s'étendant longitudinalement depuis la zone de fixation 23. L'orifice de sortie 70a est dans la zone plane radiale de la zone de fixation Le canal secondaire 70 comprend également une deuxième portion 72 qui relie la première portion 71 à la chambre C. Pour des raisons de conception, la deuxième portion 72 traverse l'extrémité 21 formant moyeu jusqu'à la chambre C, en joignant la première portion 71 dans ladite extrémité 21 formant moyeu. Une extrémité radiale interne de ladite portion 72 débouche ainsi dans la chambre C et une extrémité radiale externe de ladite portion 72 débouche sur une surface radiale externe de l'extrémité 11 formant moyeu, ladite seconde portion 72 étant sécante avec la première portion 71. En effet, les portions sont préférablement réalisées par perçage, et non par moulage de fonderie. Les portions sont préférablement rectilignes. La seconde portion 72 peut être de biais par rapport à l'extension longitudinale X ou orthogonale.
Un bouchon 73 est prévu au niveau de l'extrémité radiale externe de la deuxième portion 72 pour étanchéifier le canal secondaire 70 et permettre à l'air comprimé de la chambre C de rejoindre l'orifice de sortie 70a.

Les canaux primaire et secondaire ne sont préférablement jamais alignés, de façon à éviter une circulation directe de l'air et de maintenir un rôle tampon de la cavité C, pour éventuellement absorber des surpressions passagères. De la sorte, lorsque la portion de canal 61 et le canal secondaire 70 s'étendent rectilignement parallèlement à l'axe longitudinal X, ceux-ci sont disposés à des distances radiales différentes.

### Autres éléments

Afin de protéger le joint de chambre 50, un joint de protection 80 peut être prévu. Lorsqu'il est positionné, le joint de chambre 50 est situé entre la chambre C et le joint de protection 80 qui empêche l'eau, la poussière, etc. de venir au contact dudit joint de chambre 50.
Plus précisément, selon un mode de réalisation, le joint de protection 80 est positionné radialement entre le support de palier 10 et l'extension longitudinale 22 pour protéger le joint de chambre 50 **(****figure 2****).**
Il s'agit typiquement d'un joint bague à lèvres, déjà utilisé dans les paliers pour les protéger de l'environnement extérieur.
Le joint de protection 80 est fixe.

En outre, un joint métallique sous forme de tôle 81 est positionnée radialement à l'extérieur sur le support de palier 10 et s'étend en direction de l'extension 22 pour la recouvrir partiellement, sans la toucher. Cette tôle 81 permet de protéger le joint de protection d'éclat direct.

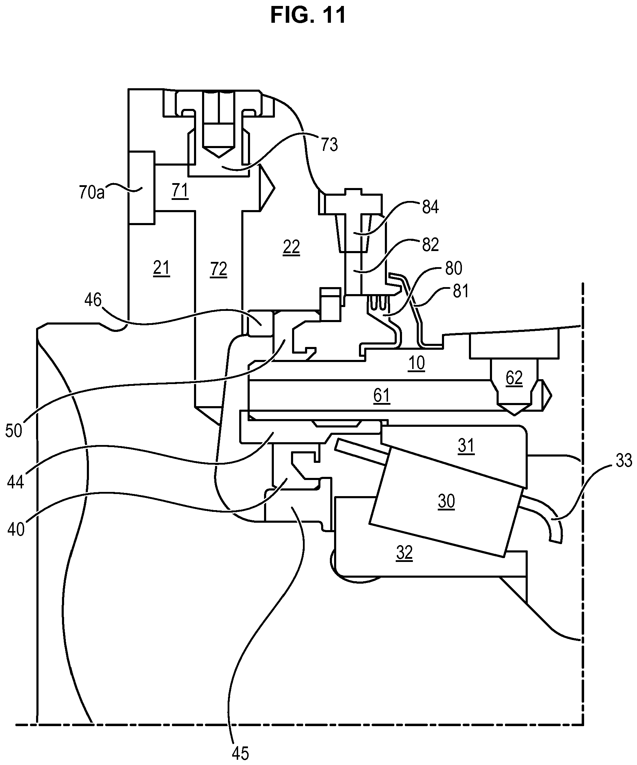

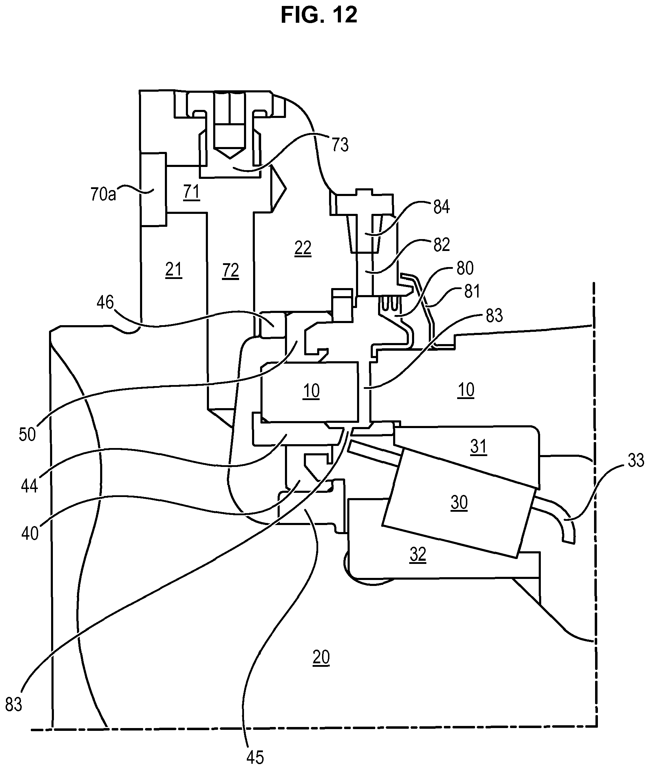

Il est possible que les joints 40, 50 présentent quelques fuites, favorisées lorsque les moyens de fourniture d'air comprimé 5 dysfonctionnent et provoquent des surpressions dans la chambre C. Les joints pourraient alors sauter de leur logement ou se déchirer, faisant ainsi passer de la saleté dans la graisse. En particulier, si le joint inter-roulement 36 est abimé, il y aurait alors un risque de fuite de graisse vers le carter du moteur lubrifié à l'huile. En effet, le joint inter-roulement 36 est en communication fluidique avec le volume entre le joint de roulement 40 et le premier jeu de roulement 30.
Pour remédier à cela, un dispositif est prévu pour permettre une mise à pression atmosphérique des volumes autour des joints 40, 50, ainsi que du volume autour des roulements 30, 35. Comme représenté en **figures 11****,** **12** un premier perçage 82 peut être prévu dans l'extension longitudinale 22. Ce perçage 82, depuis une surface extérieure à l'extrémité 21 formant moyeu débouche entre le joint de chambre 50 et le joint de protection 80. Un deuxième perçage 83 peut être prévu dans l'extrémité 11 du support de palier 10, et, le cas échéant le support de joint 44 de type frette, afin de déboucher dans la région autour des roulements 30. Une communication fluidique 82, 83 est alors prévue entre cette région et l'extérieur qui est à pression atmosphérique, via les deux perçages 82, 83. On a ainsi défini une chambre de décharge qui permet l'évacuation des surpressions de la chambre C.
Le perçage 83 dans le support de palier 10 et dans la frette 44 n'est pas nécessairement rectiligne, c'est-à-dire qu'il peut y avoir un décalage, par exemple s'il existe un volume sous forme de rainure circulaire, ou gorge, entre la frette 44 et le support de palier 10. Ladite rainure peut être réalisée dans la frette ou dans le support de palier 10. D'une manière connue cette rainure fait communiquer le perçage dans l'extrémité 11 du support de palier 10 et le perçage dans la frette 44, même s'ils ne sont pas face à face radialement, et dans une moindre mesure axialement.
Une soupape 84, qui fait office de clapet anti-retour, obture le premier perçage 82 pour à la fois permettre l'évacuation des surpressions mais aussi empêcher la saleté de pénétrer par le premier perçage 82. La soupape 84 est tarée à la pression voulue. En particulier, le tarage de la soupape 84 est suffisamment faible pour que la pression de détérioration des joints, notamment le joint inter-roulement 36 ne soit pas atteinte.
Pour éviter les interférences avec la portion 61 du canal primaire 60, le deuxième perçage 83 est effectué dans un autre plan que celle-ci, de sorte qu'il n'y ait pas de communication fluidique entre le canal primaire 60 et le deuxième perçage 83. La **figure 11** représente une vue en coupe dans le plan du canal primaire 60, par conséquent, le deuxième perçage 83 n'est pas visible. La **figure 12** représente une vue en coupe du support de palier 10 dans le plan du perçage 83.

### Les moyens de fourniture d'air comprimé

Ils peuvent prendre plusieurs formes.
Notamment, ces moyens 5 peuvent être réalisés avec :
- un compresseur dimensionné pour fournir le débit d'air et la pression nécessaires au gonflage d'un pneumatique 2b porté par la jante 2a. Il est généralement alimenté par un moteur thermique (non représenté sur les figures),
- un réservoir d'air comprimé.
De tels équipements de fourniture d'air comprimé sont très courants sur les machines à roue et véhicules. Ils peuvent être employés d'une manière connue pour faire varier la pression des pneumatiques en fonction de la nature du sol, ou d'une hauteur de véhicule. Ils peuvent être dédiés au gonflage des roues, ou être partagés avec d'autres équipements pneumatiques, tels qu'un système de suspension à coussins d'airs. Ils peuvent être liés mécaniquement au moteur principal de la machine ou du véhicule, ou être entrainés au moyen d'un machine dédiée. Cette machine dédiée peut être avantageusement électrique, et alimenté par le réseau électrique de la machine ou du véhicule, et être piloté par une unité de contrôle.
Le tuyau 4 permet de transférer l'air comprimé jusqu'à l'orifice d'admission 60a du canal primaire 60.

Le tuyau 4 est préférablement souple puisque les supports de palier 10 peuvent faire partie d'une roue directionnelle (typiquement les roues avant d'un véhicule), ou d'une roue mobile par rapport au châssis, grâce à un système de suspension.

### La machine hydraulique

En référence à la **figure 13****,** la machine hydraulique 3 est préférentiellement une machine à pistons radiaux 90 comprenant :
- une came lobée 91, notamment une came multilobes,
- une pluralité de piston 92 disposés radialement dans un bloc cylindres 93, les pistons 92 comprenant chacun un galet 94 pouvant rouler sur la came lobée 91,
- un arbre de machine 95, pouvant être solidaire du bloc-cylindre 93
Ce type de machine peut être activée ou désactivée par rétractation des pistons 92 dans le bloc 93, ou par embrayage ou débrayage du bloc 93 par rapport à l'arbre de machine 95.
Une telle machine convertit une énergie hydraulique en énergie mécanique grâce à la variation de cylindrée des pistons lorsqu'ils roulent sur la came lobée.
Une telle machine, si elle est du type à came multilobe, possède des vitesses de rotation relativement faibles mais possède un couple élevé. Cette machine tourne à la vitesse des roues.
Un carter (non représenté) et un couvercle protègent l'ensemble. D'une manière connue, le carter comprend de l'huile normalement sans pression. Le carter assure le recueil des fuites de la machine, et ce débit d'huile assure la lubrification et le refroidissement de la machine. Cependant, le carter peut être mis en faible pression pour rétracter les pistons et désactiver la machine. La machine est raccordée à une ligne d'alimentation, une ligne de retour, et une ligne de drain de carter.
La machine peut être du type où les roulements sont dans la graisse, ou bien du type où un roulement est dans la graisse, et l'autre dans l'huile, ou bien du type où les deux roulements sont dans la graisse. Si un des roulements est dans la graisse, la machine comporte un joint d'isolement entre graisse et huile.

En particulier, l'arbre de machine 95 peut être solidaire en rotation de l'arbre 20 ou bien, comme c'est le cas sur les figures, former une seule et même pièce avec l'arbre 20.
Les supports de palier 10 sont typiquement solidaires du carter et/ou du couvercle.

Un réducteur à engrenage peut être placé entre le bloc et l'arbre de sortie. Dans ce cas la machine hydraulique est préférentiellement une machine hydraulique dite rapide à pistons axiaux, ou une machine à pistons radiaux et came à un seul lobe. Dans ce cas la machine tourne plus vite que les roues.

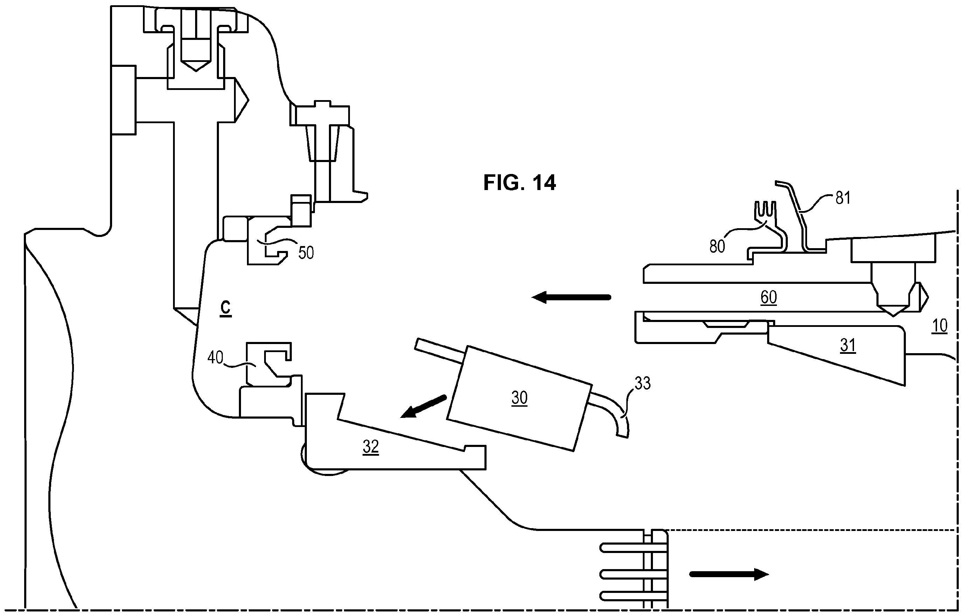

A présent, un procédé d'assemblage va être décrit **(****figure 14****).**

Dans une première étape d'équipement du palier, le support de palier 10 est équipé par la piste de roulement 31 solidaire du support de palier 10. Cette piste 31 peut être maintenue en place par le support de joint 44 de type frette.

Dans une seconde étape d'équipement du palier, le joint métallique 81 et le joint de protection 80 sont posés, ainsi que le joint inter-roulement 36.

Dans une étape d'équipement de l'arbre 20 :
- le joint de roulement 40 est positionné sur l'arbre 20, avec ou sans le support de joint 44 et/ou le support de cale 45,
- le joint de chambre 50 est posé sur l'extrémité 21 formant moyeu,
- la piste de roulement 32 de l'arbre 20 est chassée sur l'arbre,
- les roulements 30 et la cage 33 sont posés sur l'arbre.

Ensuite, le support de palier 10 est posé sur l'arbre 20 ainsi équipé.
Les pistes du deuxième jeu de roulement 35 peuvent être alors mises en place.

Enfin, dans une étape suivante, une cale 37 et un anneau élastique 38 sont placés dans une gorge annulaire s'étendant sur une périphérie de l'arbre (non représentée) à l'extérieur des roulements 30, 35. Lorsque le machine hydraulique 3 est mis en place, la cale 37 et l'anneau élastique 38 se trouvent longitudinalement entre le machine 3 et les roulements 30, 35.
La tenue de l'arbre de machine 95, ou de l'arbre 20 selon les modes de réalisation, dans le machine hydraulique 3 est ainsi améliorée.
Lorsque l'arbre 20 comprend des cannelures longitudinales (« arbre cannelé ») pour réaliser la transmission de couple entre le bloc-cylindre 93 et l'arbre 20, 90, la gorge est usinée transversalement à ces cannelures.

## Revendications

1. Système pour alimentation pneumatique de roue comprenant :
- un support de palier (10),
- un arbre (20) s'étendant selon un axe longitudinal (X) à l'intérieur du support de palier (10) et comprenant une extrémité (21) formant moyeu qui s'étend radialement (Y), l'arbre étant configuré pour être entrainé en rotation par une machine hydraulique,
- au moins un jeu de roulement de palier (30), disposé entre le support de palier (10) et l'arbre (20) pour la rotation dudit arbre dans le support de palier autour de l'axe longitudinal, le système comprenant en outre :
- une chambre (C) formée par l'extrémité (21) formant moyeu, le support de palier (10), un joint de roulement (40) et un joint de chambre (50),
- un canal primaire (60) traversant le support de palier (10) et débouchant dans la chambre (C),
- un canal secondaire (70) traversant l'extrémité (21) formant moyeu et débouchant dans la chambre (C),
dans lequel :
- le joint de roulement (40), disposé longitudinalement entre le jeu de roulement de palier (30) et la chambre (C), est au contact du support de palier (10) et de l'arbre (20) pour assurer l'étanchéité entre l'arbre (20) configuré pour être mobile en rotation et le support de palier (10) configuré pour être fixe,
- le joint de chambre (50) est au contact du support de palier (10) et de l'extrémité (21) formant moyeu pour assurer l'étanchéité entre l'extrémité (21) formant moyeu configurée pour être mobile en rotation et le support de palier (10) configuré pour être fixe.

2. Système selon la revendication 1, dans lequel l'extrémité (21) formant moyeu comprend une extension longitudinale (22) qui vient en regard d'une extrémité (11) du support de palier (10), ladite extrémité (11) du support de palier (10) étant ainsi radialement située entre l'arbre (10) et l'extension longitudinale (22).

3. Système selon la revendication 2, dans lequel le joint de chambre (50) est positionné radialement entre l'extrémité (11) du support de palier (10) et l'extension longitudinale (22).

4. Système selon la revendication 2 ou 3, dans lequel le joint de roulement (40) et le joint de chambre (50) sont situés dans un même plan radial.

5. Système selon l'une quelconque des revendications 1 à 4, dans lequel le canal primaire (60) comprend une portion de canal (61) rectiligne s'étendant longitudinalement dans l'extrémité (11) du support de palier (10) et débouchant dans la chambre (C).

6. Système selon la revendication 5, comprenant une deuxième portion de canal (63) s'étendant parallèlement à la portion de canal (61), de façon à avoir des portions avec des sections moindres.

7. Système selon l'une quelconque des revendications précédentes, dans lequel le canal secondaire (70) traverse longitudinalement dans l'extrémité (21) formant moyeu.

8. Système selon l'une quelconque des revendications précédentes, dans lequel l'extrémité (21) formant moyeu comprend une zone de fixation (23) et le canal secondaire (70) relie la chambre (C) à ladite zone de fixation (23).

9. Système selon la revendication précédente, dans lequel le canal secondaire (70) débouche dans la zone de fixation (23) en formant un angle compris entre 30 et 60° par rapport à l'axe longitudinal (X).

10. Système selon la revendication précédente, dans lequel le canal secondaire (70) comprend une première portion (71) s'étendant longitudinalement depuis la zone de fixation (23) et une deuxième portion (72) reliant la chambre (C) à la première portion (71).

11. Système selon l'une quelconque des revendications précédentes en combinaison avec la revendication 2, comprenant en outre un joint de protection (80) positionné radialement entre le support de palier (10) et l'extension longitudinale (22) pour protéger le joint de chambre (50), ledit joint de chambre (50) étant ainsi situé longitudinalement entre la chambre (C) et le joint de protection (80).

12. Système selon l'une quelconque des revendications précédentes, dans lequel un roulement de palier (30) est lubrifié avec de la graisse.

13. Ensemble comprenant :
- un système (1) selon l'une quelconque des revendications précédentes,
- des moyens de fourniture d'air comprimé (5) avec un tuyau (4), pour fournir de l'air comprimé,
- une jante (2),
dans lequel :
- la jante (2) est solidaire de l'extrémité (21) formant moyeu,
- le tuyau (4) alimente en air comprimé le premier canal (60),
- la jante (2) est alimentée en air par le deuxième canal (70), via la chambre (C).

14. Véhicule comprenant un ensemble selon la revendication précédente.

15. Procédé d'assemblage d'un système selon l'une quelconque des revendications 1 à 12, comprenant des étapes :
- d'équipement d'un support de palier (10),
- d'équipement d'un arbre (20),
- de pose du support de palier (10) et de l'arbre (20),
- d'assemblage du support de palier (10) et de l'arbre (20).

16. Procédé selon la revendication 15, dans lequel :
- l'étape d'équipement du support de palier comprend la mise en place d'une piste de roulement (31), d'un joint métallique (81), d'un joint de protection (80),
- l'étape d'équipement de l'arbre comprend la mise en place d'un joint de chambre (50) et d'un joint de roulement (40), la mise en place d'une piste de roulement (32) et du roulement (30) correspondant,
- l'étape d'assemblage du support de palier (10) et de l'arbre (20) comprend la mise en place d'une cale (37) et d'un anneau élastique (38).

## Patentansprüche

1. System für die pneumatische Radversorgung, umfassend:
- einen Lagerbock (10),
- eine Welle (20), die sich gemäß einer Längsachse (X) im Innern des Lagerbocks (10) erstreckt und ein Ende (21) umfasst, das eine Nabe bildet, die sich radial erstreckt (Y), wobei die Welle konfiguriert ist, um von einer Hydraulikmaschine rotierend angetrieben zu sein,
- mindestens ein Wälzlagerset (30), das zwischen dem Lagerbock (10) und der Welle (20) für die Rotation der Welle im Lagerbock um die Längsachse angeordnet ist, wobei das System ferner umfasst:
- eine Kammer (C), gebildet von dem Ende (21), das eine Nabe bildet, dem Lagerbock (10), einer Lagerdichtung (40) und einer Kammerdichtung (50),
- einen primären Kanal (60), der den Lagerbock (10) durchquert und in die Kammer (C) ausmündet,
- einen sekundären Kanal (70), der das Ende (21) durchquert, das eine Nabe bildet, und in der Kammer (C) ausmündet,
wobei:
- die Lagerdichtung (40), die längs zwischen dem Wälzlagerset (30) und der Kammer (C) angeordnet ist, im Kontakt mit dem Lagerbock (10) und der Welle (20) ist, um die Dichtigkeit zwischen der Welle (20), die konfiguriert ist, um rotierend beweglich zu sein, und dem Lagerbock (10), der konfiguriert ist, um fest zu sein, zu sichern,
- die Kammerdichtung (50) im Kontakt mit dem Lagerbock (10) und dem Ende (21), das eine Nabe bildet, ist, um die Dichtigkeit zwischen dem Ende (21), das eine Nabe bildet, das konfiguriert ist um rotierend beweglich zu sein, und dem Lagerbock (10), der konfiguriert ist, um fest zu sein, zu sichern.

2. System nach Anspruch 1, wobei das Ende (21), das eine Nabe bildet, eine längliche Erweiterung (22) umfasst, die einem Ende (11) des Lagerbocks (10) zugewandt ist, wobei sich dadurch das Ende (11) des Lagerbocks (10) radial zwischen der Welle (10) und der länglichen Erweiterung (22) befindet.

3. System nach Anspruch 2, wobei die Kammerdichtung (50) radial zwischen dem Ende (11) des Lagerbocks (10) und der länglichen Erweiterung (22) positioniert ist.

4. System nach Anspruch 2 oder 3, wobei sich die Lagerdichtung (40) und die Kammerdichtung (50) in einer selben radialen Ebene befinden.

5. System nach einem der Ansprüche 1 bis 4, wobei der primäre Kanal (60) einen geraden Kanalabschnitt (61) umfasst, der sich längs im Ende (11) des Lagerbocks (10) erstreckt und in die Kammer (C) ausmündet.

6. System nach Anspruch 5, umfassend einen zweiten Kanalabschnitt (63), der sich parallel zum Kanalabschnitt (61) derart erstreckt, dass Abschnitte mit kleineren Querschnitten vorliegen.

7. System nach einem der vorangehenden Ansprüche, wobei der sekundäre Kanal (70) in dem Ende (21), das eine Nabe bildet, längs verläuft.

8. System nach einem der vorangehenden Ansprüche, wobei das Ende (21), das eine Nabe bildet, einen Befestigungsbereich (23) umfasst, und der sekundäre Kanal (70) die Kammer (C) mit dem Befestigungsbereich (23) verbindet.

9. System nach vorangehendem Anspruch, wobei der sekundäre Kanal (70) in den Befestigungsbereich (23) ausmündet, indem er einen Winkel zwischen 30 und 60° inklusive in Bezug zur Längsachse (X) bildet.

10. System nach vorangehendem Anspruch, wobei der sekundäre Kanal (70) einen ersten Abschnitt (71) umfasst, der sich längs ab dem Befestigungsbereich (23) erstreckt, und einen zweiten Abschnitt (72), der die Kammer (C) mit dem ersten Abschnitt (71) verbindet.

11. System nach einem der vorangehenden Ansprüche in Kombination mit Anspruch 2, umfassend ferner eine radial zwischen dem Lagerbock (10) und der länglichen Erweiterung (22) zum Schutz der Kammerdichtung (50) positionierte Schutzdichtung (80), wobei sich dadurch die Kammerdichtung (50) längs zwischen der Kammer (C) und der Schutzdichtung (80) befindet.

12. System nach einem der vorangehenden Ansprüche, wobei ein Wälzlager (30) mit Fett geschmiert ist.

13. Einheit, umfassend:
- ein System (1) nach einem der vorangehenden Ansprüche,
- Mittel für die Bereitstellung von Druckluft (5) mit einem Schlauch (4), um Druckluft bereitzustellen,
- eine Felge (2),
wobei:
- die Felge (2) mit dem Ende (21), das eine Nabe bildet, fest verbunden ist,
- der Schlauch (4) den ersten Kanal (60) mit Druckluft versorgt,
- die Felge (2) über die Kammer (C) vom zweiten Kanal (70) mit Druckluft versorgt wird.

14. Fahrzeug, umfassend eine Einheit nach vorangehendem Anspruch.

15. Montageverfahren eines Systems nach einem der Ansprüche 1 bis 12, umfassend Schritte:
- der Bereitstellung eines Lagerbocks (10),
- der Bereitstellung einer Welle (20),
- der Montage des Lagerbocks (10) und der Welle (20),
- der Verbindung des Lagerbocks (10) und der Welle (20) .

16. Verfahren nach Anspruch 15, wobei:
- der Schritt der Bereitstellung des Lagerbocks das Platzieren einer Rollbahn (31), einer Metalldichtung (81), einer Schutzdichtung (80) umfasst,
- der Schritt der Bereitstellung der Welle das Platzieren einer Kammerdichtung (50) und einer Lagerdichtung (40), das Platzieren einer Rollbahn (32) und des entsprechenden Wälzlagers (30) umfasst,
- der Schritt der Verbindung des Lagerbocks (10) und der Welle (20) das Platzieren eines Keils (37) und eines elastischen Rings (38) umfasst.

## Claims

1. A system for pneumatically supplying a wheel comprising:
- a bearing support (10),
- a shaft (20) extending along a longitudinal axis (X) inside the bearing support (10) and comprising a hub-forming end (21) which extends radially (Y), the shaft being configured so as to be driven into rotation by a hydraulic machine,
- at least one set of rolling bearings (30), positioned between the bearing support (10) and the shaft (20) for the rotation of said shaft in the bearing support around the longitudinal axis,
the system further comprising:
- a chamber (C) formed by the hub-forming end (21), the bearing support (10), a rolling bearing seal (40) and a chamber seal (50),
- a primary channel (60) crossing the bearing support (10) and opening into the chamber (C),
- a secondary channel (70) crossing the hub-forming end (21) and opening into the chamber (C),
wherein:
- the rolling bearing seal (40), positioned longitudinally between the set of rolling bearings (30) and the chamber (C), is in contact with the bearing support (10) and the shaft (20) for ensuring the seal between the shaft (20) configured so as to be movable in rotation and the bearing support (10) configured so as to be fixed,
- the chamber seal (50) is in contact with the bearing support (10) and with the hub-forming end (21) for ensuring the seal between the hub-forming end (21) configured so as to be movable in rotation and the bearing support (10) configured so as to be fixed.

2. The system according to claim 1, wherein the hub-forming end (21) comprises a longitudinal extension (22) which will face an end (11) of the bearing support (10), said end (11) of the bearing support (10) thus being radially located between the shaft (10) and the longitudinal extension (22).

3. The system according to claim 2, wherein the chamber seal (50) is radially positioned between the end (11) of the bearing support (10) and the longitudinal extension (22).

4. The system according to claim 2 or 3, wherein the rolling bearing seal (40) and the chamber seal (50) are located in a same radial plane.

5. The system according to any one of claims 1 to 4, wherein the primary channel (60) comprises a rectilinear channel portion (61) longitudinally extending in the end (11) of the bearing support (10) and opening into the chamber (C).

6. The system according to claim 5, comprising a second channel portion (63) extending parallel to the channel portion (61), so as to have portions with smaller sections.

7. The system according to any one of the preceding claims, wherein the secondary channel (70) longitudinally crosses in the hub-forming end (21).

8. The system according to any one of the preceding claims, wherein the hub-forming end (21) comprises an attachment area (23) and the secondary channel (70) connects the chamber (C) to said attachment area (23).

9. The system according to the preceding claim, wherein the secondary channel (70) opens into the attachment area (23) by forming an angle comprised between 30 and 60° with respect to the longitudinal axis (X).

10. The system according to the preceding claim, wherein the secondary channel (70) comprises a first portion (71) longitudinally extending from the attachment area (23) and a second portion (72) connecting the chamber (C) to the first portion (71).

11. The system according to any one of the preceding claims in combination with claim 2, further comprising a protection seal (80) radially positioned between the bearing support (10) and the longitudinal extension (22) for protecting the chamber seal (50), said chamber seal (50) thus being located longitudinally between the chamber (C) and the protection seal (80).

12. The system according to any one of the preceding claims, wherein a rolling bearing (30) is lubricated with grease.

13. An assembly comprising:
- a system (1) according to any one of the preceding claims,
- means for providing compressed air (5) with a pipe (4), for providing compressed air,
- a wheel rim (2),
wherein:
- the wheel rim (2) is secured to the hub-forming end (21),
- the pipe (4) provides compressed air to the first channel (60),
- the wheel rim (2) is supplied with air through the second channel (70), via the chamber (C).

14. A vehicle comprising an assembly according to the preceding claim.

15. A method for assembling a system according to any one of claims 1 to 12, comprising the steps:
- for fitting out a bearing support (10),
- for fitting out a shaft (20),
- for mounting the bearing support (10) and the shaft (20),
- for assembling the bearing support (10) and the shaft (20).

16. The method according to claim 15, wherein:
- the step for fitting out the bearing support comprises the setting into place of a rolling track (31), of a metal seal (81), of a protection seal (80),
- the step for fitting out the shaft comprises the setting into place of a chamber seal (50) and of a rolling bearing seal (40), the setting into place of a rolling track (32) and of the corresponding rolling bearing (30),
- the step for assembling the bearing support (10) and the shaft (20) comprises the setting into place of a shim (37) and of an elastic ring (38).
